# EUROPÄISCHE PATENTSCHRIFT

(11) **EP 0 626 816 B1**
(45) Veröffentlichungstag und Bekanntmachung des Hinweises auf die Patenterteilung: **04.03.1998**
(21) Anmeldenummer: 93924496.8
(22) Anmeldetag: 25.11.1993
(51) Int. Cl.: A45F 5/02

(54) **HALTER FÜR EINE BRILLE**
FASTENER FOR A PAIR OF SPECTACLES
SUPPORT POUR LUNETTES

(30) Priorität: 26.11.1992 CH 3623/92
(43) Veröffentlichungstag der Anmeldung: 07.12.1994
(73) Patentinhaber: JANOUSCHEK, Heinz, CH-8266 Steckborn (CH)
(72) Erfinder: JANOUSCHEK, Heinz, CH-8266 Steckborn (CH)
(74) Vertreter: Gachnang, Hans Rudolf
(86) Internationale Anmeldenummer: CH9300268
(87) Internationale Veröffentlichungsnummer: WO9412073

(56) Entgegenhaltungen:
- US-A- 1 335 333
- US-A- 1 336 083
- US-A- 1 409 840
- US-A- 3 760 459

## Beschreibung

Gegenstand der vorliegenden Erfindung ist ein Halter für eine Brille gemäss Oberbegriff des Patentanspruches 1.

Brillenträger, die entweder nur zum Lesen, nur zum Sehen in die Weite oder als Schutz bei der Arbeit oder beim Sport eine Brille benötigen, bewahren letztere häufig in der Brusttasche ihres Hemdes oder Arbeitskleides auf. Bückt sich nun eine Person, die die Brille lose in der oben offenen Brusttasche aufbewahrt, so kann diese herausfallen und zerbrechen oder verlorengehen. Insbesondere im Werkstattbereich, wo sich Arbeiter oft zum Aufnehmen von Waren bücken müssen, kann dies mehrmals täglich vorkommen.

Aus der US-Patentschrift 5,033,612 ist ein Brillenhalter bekannt, der mittels einer Sicherheitsnadel an einem Bekleidungsstück befestigt werden kann. Der Brillenhalter weist eine zentrale Öffnung auf, durch welche einer der Bügel der Brille hindurchgeführt werden kann und auf der Rückseite von einer schlaufenförmigen Führung daran gehindert wird, seitlich zu verrutschen. Der bekannte Brillenhalter hat den Nachteil, dass die Brille an einem der Halter aufgehängt auf der Brust des Brillenträgers frei pendelnd gehalten wird. Die Brille ist dabei völlig ungeschützt und stört die sie tragende Person bei jeder Bewegung.

Aus der im Europäischen Recherchenbericht genannten US-Patentschrift 1,409,840 ist weiter ein Brillenetui bekannt, welches mit einem Bügel an einem Bekleidungsstück aufgehängt werden kann. Die Brille kann durch das oben offene Etui in letzteres eingeschoben werden. Der Nachteil dieses Brillenhalters besteht darin, dass sich im Etui Schmutz ansammeln kann, der beim Einschieben der Brille auf die Gläser übertragen wird und diese verunreinigt oder zerkratzt. Zudem wird die Brille im Etui nicht festgehalten und kann aus diesem herausfallen, wenn der Träger sich bückt.

Die Aufgabe der vorliegenden Erfindung liegt darin, einen Brillenhalter zu schaffen, welcher die Brille innerhalb einer Tasche eines Bekleidungsstückes oder einer Sport- oder Handtasche sicher und geschützt festhält.

Gelöst wird diese Aufgabe durch einen Brillenhalter gemäss den Merkmalen des Anspruches 1.

Überraschenderweise gelingt es mit dem erfindungsgemässen Brillenhalter, die Brille an gewohnter Stelle in der Brusttasche eines Hemdes oder in der Brust- oder Seitentasche eines Arbeitskleides zu tragen und so festzuhalten, dass sie beim Bücken nicht herausrutschen kann, jedoch bei Gebrauch leicht zu entnehmen ist. Die Brille wird nur entlang des Brillenrahmens gehalten; die Gläser bleiben stets ausser Kontakt mit dem Brillenhalter, und es kann folglich keine Verschmutzung und kein Zerkratzen der Gläser stattfinden. Dadurch, dass die Brille innerhalb der Tasche getragen wird, kann sie sich beim Bücken nicht bewegen und wird auch nicht durch äussere Einwirkungen verschmutzt. Die elastische Ausgestaltung und/oder die Einstellbarkeit der beiden die Brille haltenden Führungsflächen ermöglicht es, Brillen unterschiedlicher Grösse in ein und denselben Halter einzuführen. Der Brillenhalter ist aus Federstahl, Kunststoff, als Stanzteil oder einer Kombination dieser Materialien hergestellt. Sein Eigengewicht ist folglich minimal und für den Benutzer kaum wahrnehmbar. Die Herstellung des Brillenhalters ist kostengünstig, da dieser nur aus gebogenem Draht, gespritzten Kunststoff- oder Stanzteilen und zwei elastischen, die Führungsflächen bildenden Elementen, z.B. einem Schlauch, einer Tülle oder Formteilen, besteht. Die Formteile können genäht, geklebt oder gespritzt sein.

Anhand illustrierter Ausführungsbeispiele wird die Erfindung näher erläutert. Es zeigen:
- Figur 1: eine perspektivische Darstellung des den Brillenhalter der ersten Ausführungsform bildenden Drahtgestelles in einer Ansicht von hinten,
- Figur 2: eine Seitenansicht des Brillenhalters in Figur 1,
- Figur 3: eine Ansicht von vorne,
- Figur 4: den Brillenhalter von vorne mit einer darin eingeschobenen Brille,
- Figur 5: eine Vorderansicht eines verstellbaren Brillenhalters,
- Figur 6: eine Seitenansicht des Brillenhalters in Figur 5,
- Figur 7: eine Aufsicht auf den Brillenhalter in Figur 5,
- Figur 8: eine Vorderansicht eines weiteren verstellbaren Brillenhalters mit einer eingeschobenen Brille,
- Figur 9: eine Seitenansicht des Brillenhalters in Figur 8,
- Figur 10: eine Aufsicht auf den Brillenhalter in Figur 8 (ohne Brille),
- Figur 11: eine Ansicht einer vierten Ausführungsform des Brillenhalters aus Kunststoff,
- Figur 12: eine Seitenansicht des Brillenhalters in Figur 11,
- Figur 13: eine Ansicht einer fünften Ausführungsform des Brillenhalters aus Kunststoff,
- Figur 14: eine Seitenansicht des Brillenhalters in Figur 11, einen Längsschnitt durch den Halteteil des Brillenhalters in
- Figur 15: Figur 14 vergrössert dargestellt.

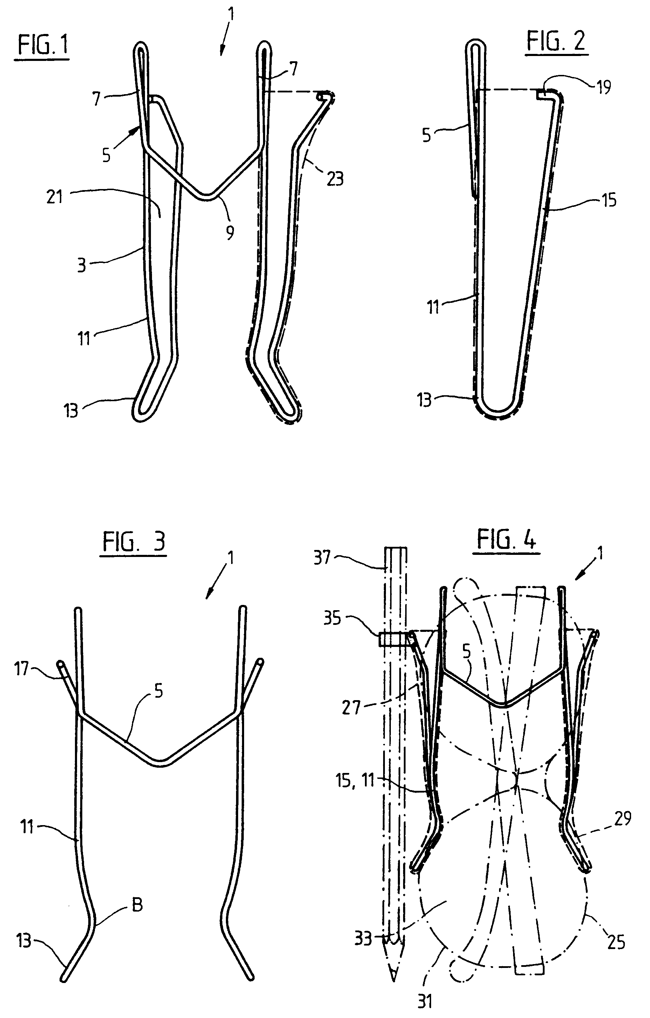

Der mit Bezugszeichen 1 bezeichnete Brillenhalter besteht in der ersten Ausführungsform der Erfindung aus einem einzigen Draht 3, der mehrfach gebogen ist und vorzugsweise eine spiegelsymmetrische Gestalt bezüglich der Vertikalen aufweist. Der obere Teil des Bügels 5, welcher das Gerüst des Brillenhalters 1 bildet, wird aus zwei vertikalen Abschnitten 7 und zwei unten an den vertikalen Abschnitten 7 anschliessenden, ein V darstellenden Abschnitten ein Haken 9, gebildet. Die oberen Enden der Abschnitte 7 sind in einem engen Radius um einen Winkel von 180° nach vorne umgebogen, und die daran anschliessenden beiden Schenkel 11 verlaufen in der Seitenansicht (Fig. 2) annähernd geradlinig nach unten. In der Ansicht von vorne (Fig. 3 und 4) verlaufen die vorderen Schenkel 11 vorerst im wesentlichen vertikal und nähern sich danach bis zur Stelle B, um danach wieder nach aussen wegzuführen. Der unterste nach aussen verlaufende Teil 13 der Schenkel 11 weist eine Länge auf, die nur einen Bruchteil, beispielsweise einen Fünftel des obenliegenden Abschnittes des Schenkels 11, beträgt.

Parallel zum Schenkel 11 verläuft der in den Figuren 3 und 4 direkt vor dem Schenkel 11 liegende, in der Seitenansicht gemäss Figur 2 sich nach oben vom Schenkel 11 entfernende Spannschenkel 15. Das obere Ende des Spannschenkels 15 verläuft, in der Ansicht von vorne (Fig. 3), im obersten Bereich 17 stärker geneigt nach aussen und wird durch das im wesentlichen rechtwinklig umgebogene Ende 19 abgeschlossen. Das umgebogene Ende 19 ragt in der Seitenansicht nach Figur 2 gegen den Bügel 5.

Der untere Teil 13, welcher den vorderen Schenkel 11 und den Spannschenkel 15 miteinander verbindet, kann zusammen mit dem unteren Teil des Spannschenkels 15 U- oder V-förmig ausgestaltet sein.

Der Halteteil 9 liegt unter Vorspannung mit seinen beiden unteren Abschnitten oder den Abschnitten 7 an den beiden vorderen Schenkeln 11 an. Der vordere Schenkel 11 und der mit diesem über den unteren Teil 13 verbundene Spannschenkel 15 bilden den Rahmen für ein elastisch ausgebildetes Kunststoff-Formteil 21, welches gebildet wird durch einen Schlauch, eine Tülle, welche von unten über den vorderen Schenkel 11 und den mit diesem verbundenen Spannschenkel 15 geschoben ist (der Schlauch 23 ist in den Figuren 1, 2 und 4 in gebrochenen Linien dargestellt).

Der Schlauch 23 besteht vorzugsweise aus flächenförmigem Material, das durch Spritzen, durch Nähen, Kleben oder Verschweissen eines textilen Flächengebildes hergestellt worden ist. Das flächenförmige Material kann gewoben oder gestrickt oder durch Extrudieren erzeugt worden sein. Die innere Weite des Schlauches 23 ist etwas kleiner als der Abstand zwischen dem vorderen Schenkel 11 und dem Spannschenkel 15 im Bereich des Endes 19. Dadurch wird der Spannschenkel 15 gegen den vorderen Schenkel 11 gebogen und hält den über die beiden Teile geschobenen Schlauch 23 gespannt. Das zwischen den Teilen 11 und 15 liegende Kunststoff-Formteil 21, d.h. die Aufnahme für die Brille, weist innen vorzugsweise einen S-förmigen Verlauf auf.

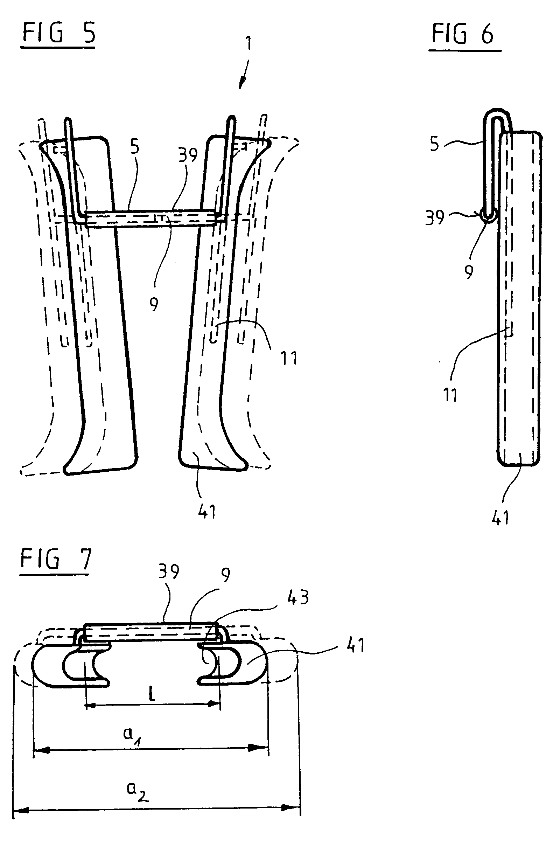

In der zweiten Ausgestaltung der Erfindung nach den Figuren 5 bis 7, welche einen zusätzlich in der Breite ein- und verstellbaren Brillenhalter 1 für grosse und kleine Brillen 25 zeigen, ist am Bügel 5 im Bereich des nun zweiteiligen Halteteiles 9 ein Zwischenteil 39 eingefügt. Die Länge l dieses Zwischenteiles 39 bestimmt den minimalen Abstand a₁ und den maximalen Abstand a₂ der beiden Kunststoff-Formteile 41, an denen die Rahmen 31 der Brille 25 anliegen. Das Zwischenteil 39 kann ein Rohr sein, dessen Innendurchmesser etwas kleiner ist wie der Aussendurchmesser des Drahtes 3 im Abschnitt 9 und diesen geklemmt hält. Es ist auch möglich, den Zwischenteil 39 als Gewindehülse auszubilden und auf den beiden Abschnitten 9 je ein entsprechendes Gewinde (nicht dargestellt) anzubringen. Auf diese Weise kann die Breite a des Brillenhalters 1 jederzeit ein- und wieder verstellt werden.
Anstelle der durch den gebogenen Draht 3 und die darübergestülpten, aus schlauchförmigem Material bestehenden Hüllen 23, wie im Beispiel nach den Figuren 1 bis 4 gezeigt, können die Kunststoff-Formteile 41 an den Schenkeln 11 befestigt werden. Die Kunststoff-Formteile 41 weisen konkave Innenflächen 43 auf, an denen der Rahmen 31 der Brille 25 anzuliegen bestimmt sind.

Der Brillenhalter 1 wird vor dem Einschieben einer Brille 25 in die oben offene Brusttasche eines Bekleidungsstückes eingesteckt, wobei der Bügel 5 aussen und die übrigen Teile des Halters 1 innerhalb der Tasche zu liegen kommen. Durch die rechtwinklig zur Oberfläche des Stoffes der Brusttasche liegenden Kunststoff-Formteile 21 wird die Brusttasche aufgeweitet, und es kann eine Brille 25 von oben zwischen die beiden Kunststoff-Formteile 21,41, gebildet durch die beiden zwischen den vorderen Schenkeln 11 und den beiden Spannschenkeln 15 gespannt gehaltenen Schläuchen oder Tüllen 23, bzw. den konkaven Innenflächen 43 der Kunststoff-Formteile 41, eingeschoben werden. Die nach aussen geneigten obersten Bereiche 17 der Spannschenkel 15 ermöglichen ein leichtes einhändiges Einführen der Brille 25. Beim Einführen der Brille 25 werden zum einen die beiden Schläuche 23 bzw. die Kunststoff-Formteile 41 elastisch nach aussen gedehnt (vgl. Bereiche 27 und 29 in Fig. 4). Nicht nur die Schläuche 23 werden gedehnt, sondern vor allem werden die beiden vom vorderen Schenkel 11 und den Spannschenkeln 15 gebildeten Teile ebenfalls nach aussen gedrängt. Die Brille 25 kommt nur mit ihrem Rahmen 31 in Anlage mit den Kunststoff-Formteilen 21,41; die Gläser 33 bleiben stets ausser Kontakt mit den die Tasche bildenden Textilien der Brusttasche oder eines Sportsackes. Je nach Beschaffenheit, d.h. dem Reibwiderstand der Oberfläche des Schlauches 23 oder der Kunststoff-Formteile 41, lässt sich die Brille 25 mit mehr oder weniger Widerstand einschieben und wird aber hauptsächlich von der Spannkraft der Spannschenkel 15 festgehalten.

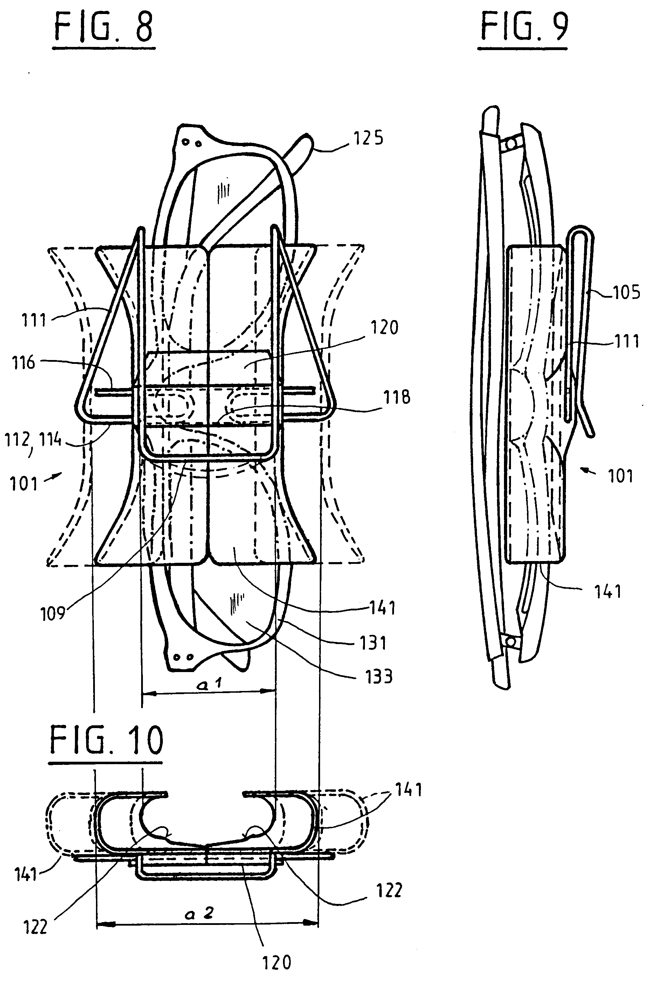

In der dritten Ausgestaltung der Erfindung gemäss den Figuren 8 bis 10 sind die Kunststoff-Formteile 141 nicht mehr an den vertikal verlaufenden vorderen Schenkeln 111 längs aufgesteckt, sondern sie werden von im wesentlichen im rechten Winkel abgebogenen Enden 112 des Bügels 105 gehalten. Die abgebogenen Enden 112 sind U-förmig ausgebildet und weisen einen unteren Schenkel 114 und einen oberen Schenkel 116 auf, welche in ungespanntem Zustand leicht V-förmig liegen. Die abgebogenen U-förmigen Enden 112 sind in je eine schlitzförmige Ausnehmung oder Öffnung 118 in den Formteilen 141 eingeschoben. Die Höhe h der Ausnehmungen 118 ist geringfügig kleiner wie die Breite der ungespannten U-förmigen Enden 112, derart, dass eine reibschlüssige Verbindung der Formteile 141 mit den Enden 112 entsteht.
Die Ausnehmung 118 ist vorzugsweise in der Mitte der vorzugsweise spiegelsymmetrisch gestalteten Formteile 141 angebracht. Dies ermöglicht die Verwendung zweier identischer Formteile 141.
Der Bügel 105, der die beiden vorderen Schenkel 111 miteinander verbindet, kann wie in den Figuren 1 bis 4 V-förmig gestaltet sein oder aber einen geraden oder gebogenen (in Fig.8 in gebrochenen Linien angedeutet) unteren Abschnitt aufweisen.
Um die Wandstärken und damit auch die Masse bzw. das Gewicht der Formteile 141 gering zu halten, können die Ausnehmungen 118 in auf der Oberfläche der Formteile 141 aufgebrachten Wulsten 120 eingelassen sein.

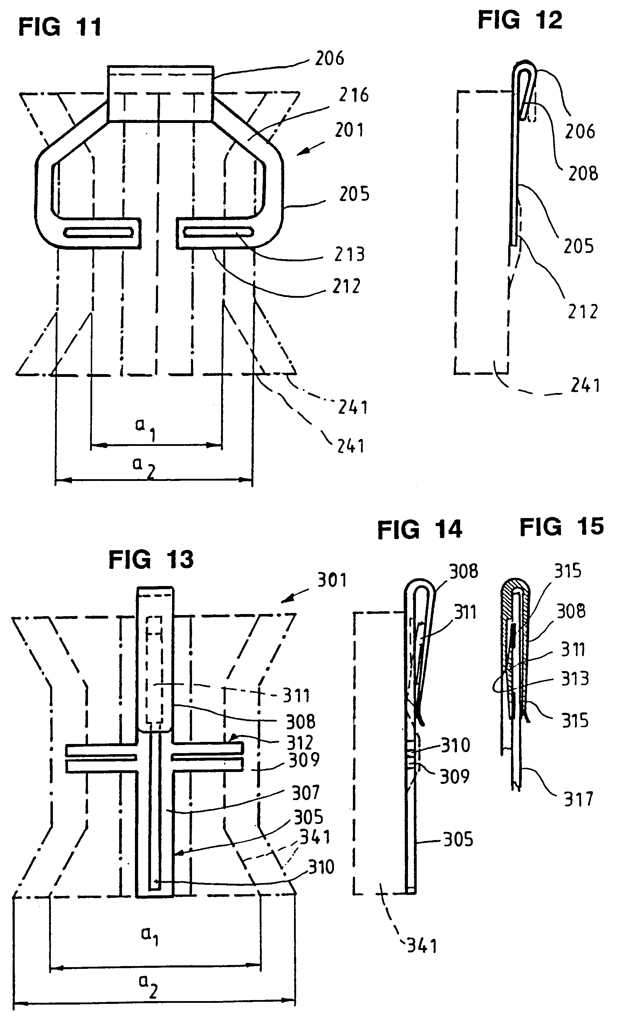

In der vierten Ausgestaltung der Erfindung gemäss den Figuren 11 und 12 ist der Bügel 205 des Halters 201 aus Kunststoff hergestellt. Die beiden die Kunststoff-Formteile 241 aufnehmenden Enden 212 ragen vom U-förmig ausgebildeten Bügel 205 im wesentlichen rechtwinklig nach innen und sind mit Schlitzen 213 versehen, welche die auf den Enden 212 aufgesteckten Kunststoff-Formteile 241 derart festhalten, dass sie bei Bedarf verschoben und damit deren gegenseitiger Abstand an die Grösse der Brille angepasst werden kann. Die Schlitze 213 können offen oder, wie in Figur 11 dargestellt, seitlich geschlossen sein. Die mit strichpunktierten Linien dargestellten Formteile 241 sind in grösstmöglichem Abstand zueinander liegend, die in gebrochenen Linien dargestellten in kleinstmöglichem Abstand.
Zum Festhalten des Brillenhalters 201 an einem Bekleidungsstück ist am oberen Schenkel 216 des Bügels 205 ein federnder Verschluss 206 angeformt, der einen mit dem Bügel 205 einteilig hergestellten Halteteil 208 aufweist, welcher in der Schliessstellung federnd am Schenkel 216 des Bügels 205 anliegt. Die Funktionsweise solcher Halteteile, wie sie auch an Kugelschreibern verwendet werden, ist aus der Praxis hinlänglich bekannt.

In der fünften Ausgestaltung der Erfindung gemäss den den Figuren 13 bis 15 besteht der Bügel 305 aus einem kreuzförmigen Gebilde, dessen zwei Balken 307,309 längsverlaufende Schlitze 310 aufweisen. Die Schlitze 310 dienen dazu, die Elastizität des Bügels 305 zu erhöhen und die auf den beiden Armen/Enden 312 aufgesteckten Kunststoff-Formteile 341 festzuhalten.
Der Halter 301 bzw. der Bügel 305, der die beiden Formteile 341 trägt, trägt am oberen Ende des vertikal liegenden Balkens einen elastisch federnd ausgebildeten, lappenförmigen Halteteil 308, dessen freies Ende am Balken 307 anliegt. Verdeckt durch den Halteteil 308 ist auf dem Balken 307 eine Wippe 311 angeordnet. Die Wippe 311 ist rückseitig über einen schmalen elastischen Steg 313 mit dem Balken 307 verbunden und weist zwei vorzugsweise geriffelte Auflagefüsschen 315 auf, die dazu bestimmt und ausgebildet sind, unabhängig von der Lage des Halteteiles 308 gleichmässig rückseitig an diesem anzuliegen.
Der Halteteil 308 kann einstückig mit dem Bügel 305 hergestellt oder als separates Metallteil mit den Balken 307 verbunden sein.

Beim Einschieben einer Brille zwischen die beiden Kunststoff-Formteile 341 wird der Balken 307 des Bügels 305 gespreizt, d.h. der Schlitz 310 wird aufgeweitet. Durch die Federungseigenschaften des Kunststoffes des Bügels 305 bzw. des Balkens 307 wird die eingesteckte Brille sicher festgehalten.
Beim Einschieben des Halters 301 in die Brusttasche 317 eines Hemdes oder eines Arbeitskleides wird der Halteteil 308 nach aussen gebogen und kommt auf der Aussenseite der Brusttasche anzuliegen. Die Wippe 311 liegt mit ihren beiden Füsschen 315 auf der Innenseite der Brusttasche 317 an und presst diese satt an den Halteteil 308. Durch die doppelte Auflage der beiden Füsschen 315 wird der Brillenhalter 301 in der vertikalen Lage in der Brusttasche 317 festgehalten.

Auf den Halteteilen 208 und 308 können Bereiche vorgesehen sein, auf denen Werbeaufdrucke angebracht werden können.

Die Formteile 41,141,241,341 können im Innern für die Auflage des Rahmens 31,131 der Brille 25,125 Stufen 122 aufweisen, die einen direkten Kontakt der Gläser 33,133 mit den Formteilen 41,141 ausschliessen und dadurch ein Zerkratzen der Gläser 133 verhindern.

Durch Verschieben der Formteile 141,231,341 auf den Enden 112,221,312 kann der Brillenhalter 101,201,301 an die Grösse der zu verstauenden Brille 125 jederzeit stufenlos angepasst werden.

An einem oder an beiden Kunststoff-Formteilen können zusätzlich rohr-, ring- oder laschenförmige Aufnahmevorrichtungen 35 zum Einstecken eines Schreibwerkzeuges 37 angebracht sein.

## Patentansprüche

1. Halter (1,101,201,301) für eine Brille (25,125), mit einem Bügel (5,105,205,305) zum Befestigen der Aufnahme für eine Brille und zum Festklemmen des Halters (1,101,201,301) an einem Bekleidungsstück oder an einer Tragtasche, dadurch gekennzeichnet, dass die Aufnahme zwei einander gegenüberliegende, mit dem Bügel (5,105,205,305) verbundene, elastisch ausgebildete oder elastisch federnd gehaltene Kunststoff-Formteile (21,41,141,241,341) zum seitlichen Festklemmen der Brille (25,125) an deren Rahmen oder Gestell (31,131) aufweist.

2. Halter nach Anspuch 1, dadurch gekennzeichnet, dass die beiden Kunststoff-Formteile (21,41,141,241,341) symmetrisch ausgebildet sind.

3. Halter nach einem der Ansprüche 1 oder 2, dadurch gekennzeichnet, dass der Bügel (5,105) durch einen Draht (3) aus Federstahl oder einem federelastischen Material gebildet wird, wobei im Bereich der Kunststoff-Formteile (21) der Draht (3) aus zwei im wesentlichen parallel geführten Schenkeln (11,15) besteht und die Kunststoff-Formteile (21) aus einem die beiden Abschnitte (11 und 15) des Drahtes (3) überspannenden Material bestehen.

4. Halter nach Anspruch 3, dadurch gekennzeichnet, dass das flächenförmige Material aus einem Schlauch oder einer Tülle (23) aus einem gewobenen, gestrickten oder gespritzten Flächengebilde besteht und dass der Schlauch (23) auf die die Kunststoff-Formteile (21) bildenden vorderen Schenkel (11) und Spannschenkel (15) aufgesteckt ist.

5. Halter nach einem der Ansprüche 1 oder 2, dadurch gekennzeichnet, dass der Bügel (205) aus einem im wesentlichen U-förmig ausgebildeten Körper aus Kunststoff besteht, an dessen nach unten ragenden Schenkeln rechtwinklig nach innen gerichtete Enden (212) angeordnet sind und an dessen oben liegenden Basisteil (216) ein elastisch federnd ausgebildeter Halteteil (208) befestigt ist.

6. Halter nach einem der Ansprüche 1 oder 2, dadurch gekennzeichnet, dass der Bügel (305) aus einem kreuzförmig ausgebildeten Gebilde aus Kunststoff besteht, dessen horizontal liegender Balken (309) die beiden die Kunststoff-Formteile (341) tragenden Enden (312) bildet und dessen vertikaler Balken (307) an seinem oberen Ende den Halteteil (308) trägt.

7. Halter nach Anspruch 6, dadurch gekennzeichnet, dass am vertikalen Balken (307) eine gegen den Halteteil (308) gerichtete Wippe (311) um einen Steg (313) schwenkbar befestigt ist.

8. Halter nach Anspruch 7, dadurch gekennzeichnet, dass an den Enden der Wippe (311) Füsschen zur Anlage am Halteteil (308) angeordnet sind.

9. Halter nach einem der Ansprüche 1 bis 8, dadurch gekennzeichnet, dass an mindestens einem der Kunststoff-Formteile (21,41,141) ein rohr-,ring- oder laschenförmig ausgebildetes Mittel (35) zur Aufnahme eines Schreibwerkzeuges (37) angebracht ist.

10. Halter nach einem der Ansprüche 1 bis 4, dadurch gekennzeichnet, dass der Abstand (a) der Kunststoff-Formteile (21,41,141) durch ein am Bügel (5) aufsteckbares oder mit Gewinden versehenes einschraubbares Zwischenteil (39) mit einer Länge (l) einstellbar ist oder dass der Abstand (a) durch Verschieben der Formteile (141) auf abgewinkelten Enden (112) an den vorderen Schenkeln (111) einund verstellbar ist

## Claims

1. A fastener (1, 101, 201, 301) for a pair of spectacles (25, 125), with a clip (5, 105, 205, 305) for fixing the holding device for a pair of spectacles and for clamping into place the fastener (1, 101, 201, 301) to a garment or a carry bag, characterised in that the holding device comprises two moulded plastic parts (21, 41, 141, 241, 341) facing each other, which are elastic or elastically-sprung, for lateral clamping fast of the pair of spectacles (25, 125) by their frame (31, 131).

2. A fastener according to claim 1, characterised in that the two moulded plastic parts (21, 41, 141, 241, 341) are shaped symmetrically.

3. A fastener according to one of claims 1 or 2, characterised in that the clip (5, 105) is formed by a wire (3) made from spring steel or from an elastic material; whereby in the area of the plastic moulded parts (21), the wire (3) comprises two sides (11, 15) essentially aligned parallel to each other, and the plastic moulded parts (21) are made of a material covering the two sections (11 and 15) of the wire (3).

4. A fastener according to claim 3, characterised in that the sheetlike material comprises a hose or a spout (23) made of a woven, knitted or sprayed sheetlike structure and that the hose (23) is placed upon the front legs (11) and the tensioning legs (15) forming the moulded plastic parts (21).

5. A fastener according to one of claims 1 or 2, characterised in that the clip (205) consists of an essentially u-shaped body of plastic, on whose downward reaching legs, there are extremities (212) pointing inward at right angles, with an elastically-sprung fastening part (208) being attached to their upper base part (216).

6. A fastener according to one of claims 1 or 2, characterised in that the clip (305) consists of a cruciform structure made of plastic, with its horizontal beam (309) forming the two extremities (312) carrying the two moulded plastic parts (341), and its vertical beam (307) at its upper extremity carrying the fastening part (308).

7. A fastener according to claim 6, characterised in that hinged to the vertical beam (307) is a rocking part (311) pointing towards the fastening part (308); the said rocking part (311) being hinged to a stay (313).

8. A fastener according to claim 7, characterised in that at the extremities of the rocking part (311) there are small feet for abutting to the fastening part (308).

9. A fastener according to one of claims 1 to 8, characterised in that attached to at least one of the moulded plastic parts (21, 41, 141) is a tubular, annular or strap-like means (35) for holding a writing implement (37).

10. A fastener according to one of claims 1 to 4, characterised in that the spacing (a) of the moulded plastic parts (21, 41, 141) can be set by an intermediate part (39) of a length (l) which intermediate part (39) can be placed upon, or threaded onto, the clip (5); or in that the distance (a) can be set and adjusted by moving the moulded parts (141) at angled extremities (112) on the front legs (111).

## Revendications

1. Support (1,101,201,301) pour lunettes (25,125), avec une bride (5, 105, 205, 305) servant à fixer le logement pour une paire de lunettes et attacher le support (1,101,201,301) à un vêtement ou un sac, caractérisé en ce que le logement présente deux pièces moulées en matière plastique (21,41,141,241,341) disposées l'une en face de l'autre et reliées à la bride (5,105,205,305), lesquelles sont de construction élastique ou maintenues de manière élastique et destinées à la fixation latérale des lunettes (25,125) par l'intermédiaire de la monture ou du châssis (31,131) de celles-ci.

2. Support selon la revendication 1 caractérisé en ce que les deux pièces moulées (21,41,141,241,341) sont réalisées de façon symétrique.

3. Support selon l'une des revendications 1 ou 2 caractérisé en ce que la bride (5,105) est formée par un fil métallique (3) en acier à ressorts ou réalisé dans une matière élastique, lequel comprend, à la hauteur des pièces moulées en matière plastique (21), deux côtés (11,15) sensiblement parallèles, les pièces moulées (21) en matière plastique étant réalisées dans un matériau qui recouvre les deux sections (11 et 15) du fil métallique (3).

4. Support selon la revendication 3 caractérisé en ce que le matériau planiforme est un flexible ou une gaine (23) réalisé dans un produit planiforme tissé, tricoté ou extrudé et en ce que le flexible (23) est rapporté sur le côté antérieur (11) et le côté de serrage (15) formant les pièces moulées (21) en matière plastique.

5. Support selon l'une des revendications 1 ou 2 caractérisé en ce que la bride (205) est composée d'un élément en matière plastique sensiblement en forme de U dont les côtés faisant saillie vers le bas ont été pourvus d'extrémités (212) tournées à angle droit vers l'intérieur et sur la base (216) supérieure duquel on a fixé une partie de retenue (208) de construction élastique.

6. Support selon l'une des revendications 1 ou 2 caractérisé en ce que la bride (305) est une construction en matière plastique en forme de croix dont la traverse (309) forme les deux extrémités (312) supportant les pièces moulées (341) en matière plastique, l'extrémité supérieure de sa branche verticale (307) soutenant la partie de retenue (308).

7. Support selon la revendication 6 caractérisé en ce que sur la branche verticale (307), une bascule (311), tournée contre la partie de retenue (308), a été fixée pivotante autour d'une barrette (313).

8. Support selon la revendication 7 caractérisé en ce que, sur les extrémités de la bascule (311), on a disposé des pieds destinés à s'appuyer sur la partie de retenue (308).

9. Support selon l'une des revendications 1 à 8 caractérisé en ce qu'un au moins une des pièces moulées (21,41,141) en matière plastique est pourvue d'un moyen (35) en forme de tube, d'anneau ou d'éclisse destiné à recevoir un crayon ou moyen d'écriture similaire (37).

10. Support selon l'une des revendications 1 à 4 caractérisé en ce qu'un élément intermédiaire (39) de longueur (l) pouvant être attaché à la bride (5) ou pourvu de filets de manière à être vissé permet de régler la distance (a) entre les pièces moulées (21,41,141) en matière plastique ou en ce qu'il est possible de régler et de modifier cette distance (a) en décalant les pièces moulées (141) sur des extrémités repliées (112) situées sur les côtés avant (111).
